Europäisches Patentamt

European Patent Office

Office européen des brevets

(19)

(11) Veröffentlichungsnummer: **0 027 885**
**B1**

(12) **EUROPÄISCHE PATENTSCHRIFT**

(45) Veröffentlichungstag der Patentschrift: **04.07.84**

(51) Int. Cl.³: **H 01 G 4/10**

(21) Anmeldenummer: **80105497.4**

(22) Anmeldetag: **15.09.80**

(54) Verfahren zur Herstellung eines Dünnfilm-Kondensators.

(30) Priorität: **30.10.79 US 89710**

(43) Veröffentlichungstag der Anmeldung:
**06.05.81 Patentblatt 81/18**

(45) Bekanntmachung des Hinweises auf die Patenterteilung:
**04.07.84 Patentblatt 84/27**

(84) Benannte Vertragsstaaten:
**AT DE FR GB IT**

(56) Entgegenhaltungen:
**US - A - 4 000 055**
**US - A - 4 038 167**

(73) Patentinhaber: **International Business Machines**
**Corporation**
**Old Orchard Road**
**Armonk, N.Y. 10504 (US)**

(72) Erfinder: **Bhattacharyya, Arup**
**18 Glenwood Drive**
**Essex Juntion Vermont 05452 (US)**
Erfinder: **Chu, Wei-Kan**
**22 Wayne Drive**
**Poughkeepsie New York 12601 (US)**
Erfinder: **Howard, James Kent**
**Cedar Hill Road**
**Fishkill New York 12524 (US)**
Erfinder: **Wiedmann, Francis Walter**
**Route 100**
**Stowe Vermont 05672 (US)**

(74) Vertreter: **Busch, Robert, Dipl.-Ing.**
**Schönaicher Strasse 220**
**D-7030 Böblingen (DE)**

Courier Press, Leamington Spa, England.

**Beschreibung**

Die Erfindung betrifft ein Verfahren zum Herstellen eines Dünnfilm-Kondensators mit Metalloxid- oder -nitrid-Dielektrikum hoher Dielektrizitätskonstante, bei welchem auf ein Isolations- oder Halbleitersubstrat ein erster elektrisch leitender Metall-Dünnfilm als Kondensatorbelag aufgebracht wird, auf dem in einer Vakuumkammer eine Metalloxid- oder -nitridlage als dielektrischer Dünnfilm gebildet wird, um abschließend hierauf einen zweiten elektrisch leitenden Metall-Dünnfilm als Gegenbelag aufzutragen.

Die Herstellung von Dünnfilm-Kondensatoren ist wohlbekannt. Bei einem der bekannten Verfahren wird zunächst ein metallischer Dünnfilm, bestehend z.B. aus Tantal, als einer der vorgesehenen Kondensatorbeläge auf ein dielektrisches Substrat niedergeschlagen. Die sich ergebende Schichtzusammensetzung wird dann einem Anodisierungsverfahren zur Bildung einer dielektrischen Tantaloxidschicht auf dem zuvor niedergeschlagenen Tantalfilm unterzogen. Das Anwenden eines derartigen Verfahrens ist jedoch relativ zeitaufwendig, so daß hiermit ein beträchtlicher Kostenfaktor beim Herstellen derartiger Kondensatoren verbunden ist. Fernerhin ergibt sich hierdurch noch der Nachteil, daß die durch anodisieren eines Tantalfilms erzeugte Tantaloxidschicht ein Sauerstoffdefizit aufweist und daher ein relativ dicker Tantaloxidüberzug erforderlich ist, um annehmbare Kondensatoreparameter zu erhalten.

In der USA-Patentschrift 4 002 545 findet sich ein demgegenüber verbessertes Verfahren zur Herstellung von Dünnfilm-Kondensatoren mit Tantaloxid-Dielektrikum. Zur Bereitstellung eines der Kondensatorbeläge wird ein nicht aus Tantal bestehender elektrisch leitender Film auf ein dielektrisches Substrat aufgetragen. Über den derart gebildeten Kondensatorbelag wird dann ein Tantal-Dünnfilm niedergeschlagen, so daß sich eine Doppelschicht als elektrisch leitender Dünnfilm ergibt. Das mit einer derartigen Doppelschicht versehene Substrat wird dann in ein evakuiertes Gefäß, das mit einer Mischung von Sauerstoff und einem trägen Gas gefüllt wird, eingebracht. Anschließend wird ein Tantaloxid-Film mittels Hochfrequenzzerstäubung auf den Doppelschichtfilm niedergeschlagen. Das dielektrische Substrat mit der so erhaltenen Schichtenfolge wird in einem nächsten Verfahrensschritt abgekühlt, um abschließend einen elektrischleitenden Film auf die Tantaloxidschicht zur Bereitstellung eines Gegenbelages als weiteren Kondensatorbelag aufzubringen.

In der genannten US-Patentschrift wird darüber hinaus auch ein sich aus dem bereits erwähnten Sauerstoffdefizit ergebendes Problem angesprochen, welches sich an sich ebenfalls bei HF-Zerstäubung eines Tantaloxidfilms auf das Tantalsubstrat einstellt. Bei Anwenden des dort gezeigten Verfahrens jedoch soll in so weit Abhilfe geschaffen werden. Ein grundsätzlicher Nachteil der dort gezeigten Methode, ebenso wie anderer bekannter Methoden zur Herstellung von Dünnfilm-Kondensatoren besteht darin, daß es hierbei nicht möglich ist, einen dielektrischen Dünnfilm einer Stärke von weniger als 200 nm herzustellen, der brauchbare Eigenschaften hinsichtlich des Kapazitäts-, Temperatur - Koeffizienten- und Leckstromverhaltens sowie der Ableitung, speziell bei Betriebstemperaturen oberhalb 200°C, aufweist. Hinzu kommt noch, daß sich der Bedarft nach dielektrischen Ultra-Dünnfilmen in letzter Zeit erhöht hat, und zwar aufgrund der angestrebten höheren Packungsdichten bei Mikrominiaturisierung von Halbleiterschaltungen. Als Zielvorstellung gelten Dünnfilm-Kondensatoren mit einem Verhältnis der Dielektrizitäts-Konstanten zur Dicke (ausgedrückt in nm), das größer ist als etwa 0,4 $nm^{-1}$. Da die meisten als Dielektrikum geeigneten Metalloxide eine Elektrizitätskonstante zwischen etwa 15 bis etwa 60 besitzen, ergibt sich, daß die Dicke des Dielektrikums geringer als etwa 150 nm sein muß, um den angestrebten Verhältniswert von Dielektrizitätskonstante zu Dielektrikumsdicke mit einem größeren Wert als 0,4 $nm^{-1}$ zu erhalten.

Dieser Bedingung läßt sich dank der Erfindung nachkommen. Dabei stellt sich die Aufgabe, einen Ultra-Dünnfilmkondensator mit einer Dicke von weniger als etwa 150 nm zu entwickeln, der dank des anzuwendenden Herstellungsverfahrens erstrebenswerte Eigenschaften hinsichtlich Kapazität, Kapazitäts-Temperaturkoeffizienten, Leckstromverhaltens und Ableitungsverluste besitzt.

Die Erfindung, wie sie in den Ansprüchen gekennzeichnet ist, löst die Aufgabe, einen Dünnfilm-Kondensator hoher Dielektritätskonstante herzustellen, durch unmittelbares Aussetzen der Oberfläche des Kondensatorbelags der Ionenstrahl-Implantation, so daß der betreffende Metall-Dünnfilmbereich je nach Art der implantierten Ionen entweder in eine Metalloxid- oder -nitridlage auf dem Kondensatorbelag umgewandelt wird, und daß anschließend mittels eines Aufheizverfahrensschritts in einer je nach be der Ionenstrahl-Implantation angewendeten Ionenart gewählten Atmosphäre aus Sauerstoff oder Stickstoff die bei der Ionenstrahl-Implantation entstandenen Oberflächenschäden des dielektrischen Dünnfims durch Temperaturbehandlung ausgemerzt werden, bevor abschließend der Gegenbelag aufgebracht wird.

Das hierbei verwendete Substrat kann dabei entweder ein Halbleiter sein oder aus dielektrischem Material bestehen. Die Implantation der $O^+$- und $N^+$-Ionen reicht jedenfalls aus, im betreffenden Oberflächenbereich der Metallschicht stöchiometrisch gesehen einen Überschluß an $O^+$- bzw. $N^+$-Ionen herbeizuführen. Beim nachfolgenden Aufheizungsvorgang sind Temperatur und Aufheizzeit so gewählt, daß sich eine Stabilisierung der sich durch den Implantationsvorgang im Oberflächenbereich des elektrisch leitenden Films ergebenden Oxid- bzw. Nitridstruktur einstellt.

Anhand von Ausführungsbeispielen wird nachstehend die Erfindung mit Hilfe der unten aufgeführten Zeichnungen näher erläutert.

Es zeigen:

Fig. 1 ein Verfahrensablaufplan mit zwei Alternativlösungen zur Herstellung von Ultra-Dünnfilmkondensatoren,

Fig. 2 einen Querschnittsausschnitt eines Schichtaufbaus eines Ultra-Dünnfilm-Kondensators.

Zunächst sei darauf hingewiesen, daß die Zeichnungen zur Erläuterung der Erfindung nur rein schematisch ausgeführt sind, also damit keine maßstäbliche Wiedergabe unter Einhalten der tatsächlichen Proportionen vorliegt. Zur Vereinfachung der Beschreibung werden die verschiedenen Aspekte vorliegender Erfindung im Zusammenhang mit der Herstellung eines Tantaloxidfilms, der für die Verwendung als Ultra-Dünnfilmdielektrikum in einem Kondensator in hervorragendem Maße geeignet ist, behandelt.

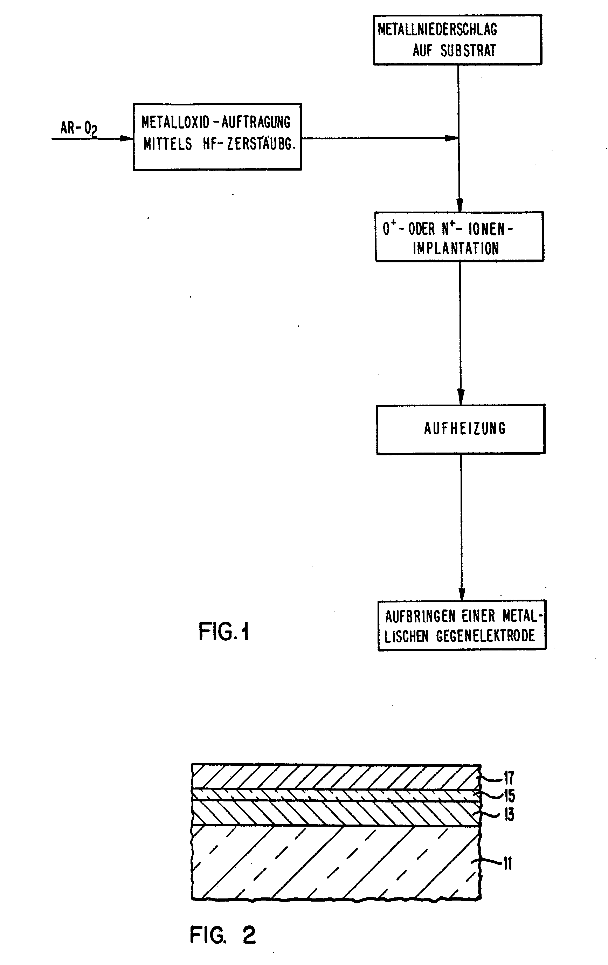

Im einzelnen zeigt Abbildung 2 ein Substrat 11, das aus einem Dielektrikum oder Halbleiter bestehen kann, worauf eine elektrisch leitender Metalldünnfilm als Kondensatorbelag 13 aufgebracht ist. Der Kondensatorbelag 13 wird gemäß dem einen Ausführungsbeispiel der Erfindung einem entsprechenden Verfahrensschritt unterzogen, der eine Schicht 15 mit hierin implantierten $O^+$- oder $N^+$-Ionen bereitzustellen vermag. Ein weiterer Kondensatorbelag als Gegenbelag 17 wird dann abschließend auf die so durch Implantation herbeigeführte Oxidschicht 15 aufgebracht.

Bei dem anderen Ausführungsweg wird, gemäß der Darstellung nach Fig. 3, zunächst eine Metalloxidschicht 19 auf den Kondensatorbelag 13 aufgebracht, bevor gemäß der Erfindung der Verfahrensschritt zum Bereitstellen einer mit $O^+$- oder $N^+$-Ionen implantierten Schicht 15 zum Einsatz gebracht wird. Bei dem Schichtaufbau nach Fig. 3 kann sich die implantierte Schicht 15, wie gezeigt, entweder nur partiell in die Schicht 19 oder durch die gesamte Schicht 19 hindurch erstrecken. Andererseits wäre es auch möglich, die implantierte Schicht 15 beim Schichtaufbau nach Fig. 2 durch Anwenden entsprechend hoher strahls Energie unterhalb der Oberfläche der Metallschicht 13 einzutreiben. Bei einem derartigen Vorgehen wird so die dielektrische Schicht 15 zwischen den Kondensatorbelägen 13 und 17 an Ort und Stelle gebildet.

Wie bereits in der Beschreibungseinleitung angedeutet, geht das Bestreben zur Bereitstellung von dielektrischen Ultra-Dünnfilmen von den Anforderungen nach hohen Schaltkreisdichten in der Rechnertechnik aus, wobei ein Verhältnis von $\varepsilon/d$ mit $\varepsilon$=Dielektrizitäts-konstante und d=Dielektrikumsdicke—gemessen in nm—von größer als 0,4 nm$^{-1}$ angemessen und erstrebenswert erscheint. Ausgehend von diesem Verhältniswert läßt sich ersehen, daß Metalloxyd-Dielektrika mit einer Dielektrizitäts-Konstanten von 15 eine Dielektrikumsdicke d von weniger als 37,5 nm erfordern. Im vorliegenden Falle werden bevorzugt Metalloxide mit einer Dielektrizitäts-Konstanten $\varepsilon$ von mindestens 20 verwendet, wobei eine minimale Dicke d von weniger als 50 nm erforderlich ist.

Bevorzugte Metalloxide zur Verwendung als dielektrisches Material bei Anwendung des Verfahrens gemäß der Erfindung sind diejenigen Elemente aus der Reihe der Seltenen-Erden- und Übergangsmetalloxide, die eine Dielektrizitäts-Konstante von mindestens 15 besitzen und sich während der Ionenstrahlimplantations-Behandlung in eine amorphe Struktur umwandeln lassen. Speziell bevorzugte Metalloxide zur Anwendung als Dielektrikum sind: Tantaloxid, Niobiumoxid, Titanoxid und Vanadiumoxid. Während Hafniumoxid und Zirkoniumoxid brauchbare Dielektrizitäts-Konstanten von etwa 30 aufweisen, ergeben sich jedoch bei Ionenstrahlimplantation gemäß der Erfindung keine amorphen Schichtstrukturen. Die Zweckmäßigkeit zur Bildung amorpher Schichtstrukturen während des Ionenstrahl-implantations-Verfahrensganges wird nachstehend noch im Zusammenhang mit dem Verfahrensschritt zur Bildung der Metalloxidschicht mittels HF-Zerstäubung behandelt.

Zurückkommend auf Fig. 1 besteht der erste Verfahrensschritt zur Herstellung eines Ultra-Dünnfilm-Kondensators gemäß der Erfindung darin, auf eine Oberfläche eines Substrats 11 einen elektrischleitenden metallischen Dünnfilm als Kondensatorbelag 13 aufzubringen. Der Kondensatorbelag 13 hat vorzugsweise eine Dicke von etwa 50 bis etwa 1000 nm. Das zur Bereitstellung dieses Kondensatorbelages 13 verwendete Metall sollte gegebenenfalls mit dem Metalloxidfilm 19 verträglich sein, der beim alternativen Ausführungsweg gemäß der Erfindung Anwendung findet.

Die bei Durchführen einer Ionenstrahl-Implantation mit $O^+$- oder $N^+$-Ionen bis zum Erreichen der gewünschten Dicke im Kondensatorbelag 13 angewandte Anzahl von Ionen pro cm², also die Dosis pro Flächeneinheit, ist ziemlich hoch und liegt im allgemeinen innerhalb des Bereichs von etwa $5 \times 10^{16}$ bis $5 \times 10^{17}$ Ionen/cm². Eine Strahlenergie von etwa 1 keV bis etwa 50 keV läßt sich zum Durchführen einer entsprechenden Ionenstrahl-Implantation anwenden. Bei Strahlstromstärken von 150 $\mu$A ist eine Behandlungszeitdauer zwischen 4 und 20 Stunden erforderlich, um die erforderliche Ionenkonzentration zu erhalten. Demgemäß verringert sich die notwendige Behandlungszeitdauer bei Anwenden entsprechend höherer Strahlstromstärken, um die angestrebten hohen Konzentrationswerte zu erhalten.

Wie bereits angedeutet, lassen sich entweder $O^+$- oder $N^+$-lonen für den Ionenstrahlimplantations-Verfahrensschritt anwenden, um so entweder einen Oxid- oder Nitridüberzug auf der betreffenden Oberfläche des Kondensatorbelags 13 zu erhalten. Die Ionenstrahl-Implantation wird jedenfalls solange fortgesetzt, bis die gewünschte Konzentration in Form des Oxid- oder Nitridüberzugs im Oberflächenbereich des Dünnfilm-Kondensatorbelages 13 erreicht ist. Bei Tantal mit einer Dielektrizitäts-Konstanten $\varepsilon$ von 25 kann die Dicke d des dielektrischen Dünnfilms viel geringer sein als etwa 62,5 nm, wenn nur die Erfordernis des Verhältnisses von $\varepsilon/d$ mit größer als 0,4 nm$^{-1}$ eingehalten wird.

Während der Implantation der Ionen in die Metallschicht wird die Metalloberfläche bei derartig hoher Strahlenergie im Zuge eines Zerstäubungsvorgangs angegriffen. Dabei wird zum Erreichen einer Ionenimplantationstiefe von etwa 60 nm die Metalloberfläche durch Zerstäuben um 50 nm bis zu 100 nm abgetragen.

Nach Abschluß des Ionenstrahlimplantations-Verfahrens wird die erhaltene Schichtungsanordnung in einen Ofen zum Aufheizen eingebracht. Es hat sich nämlich gezeigt, daß ein Aufheizungsverfahrensschritt die in den Oberflächenbereich implantierten Ionen im Metalloxid oder -nitrid fest einbaut, so daß damit erheblich die Stabilität der Kapazität während des Betriebes heraufgesetzt wird. Beim Aufheizvorgang stellen Temperaturen zwischen etwa 150 und etwa 400°C in einer Sauerstoffatmosphäre bei $O^+$-Ionenimplantation und in einer Stickstoffatmosphäre für $N^+$-Ionenimplantation sowie für Anwendungszeitdauern zwischen etwa 1 und 5 Stunden geeignete Betriebsparameter dar, um sowohl den mit der Aufheizung verfolgten Zweck herbeizuführen als auch die Oberflächenschädigungen infolge der Ionenstrahlimplantation auszuheilen.

Anhand von praktisch ausgeübten Ausführungswegen lassen sich weitere Vorteile erkennen, die mit Hilfe der Erfindung zu erzielen sind.

Gemäß einem ersten Ausführungsbeispiel soll ein Ultra-Dünnfilmkondensator, wie in Fig. 2 angedeutet, hergestellt werden.

Hierzu wird ein Dünnfilm aus Tantal auf ein Siliciumdioxid-Substrat aufgestäubt. Die Dicke des Tantaldünnfilms beträgt etwa 250 nm. Die so erhaltene geschichtete Anordnung wird dann einer $O^+$-Ionenstrahlimplantation ausgesetzt. Hierzu wird eine Ionenstrahlenergie von 30 keV während 10 Stunden aufgewendet.

Nach Abschluß der Ionenstrahl-Implantation zeigt sich ein Film in einer Stärke von etwa 60 nm, der eine $O^+$-Konzentration von $1,4\times10^{17}$ Ionen pro cm$^2$ aufweist. Anschließend wird diese geschichtete Anordnung an Luft auf eine Temperatur von 400°C während einer Zeitdauer von 60 Minuten aufgeheizt, um so den implantierten Film zu stabilisieren.

Ein Gegenkondensatorbelag aus Aluminium wird abschließend unter Niederschlag im Vakuum auf die so erhaltene geschichtete Anordnung aufgebracht. Der Gegenkondensatorbelag weist eine Dicke von 500 nm auf.

Ein derart hergestellter Kondensator besitzt eine Kapazität von etwa 600 pF oder von ungefähr $3,35\times10^{-15}$ F/m$^2$ und eine Durchbruchspannung von etwa 5 V. Die Durchbruchspannung ist definiert als diejenige Spannung, die erforderlich ist, um einen Leckstrom von größer oder gleich $10^{-4}$ A herbeizuführen. Der tatsächlich ermittelte Leckstrom bei einer angelegten Spannung von 1 V beträgt etwa $10^{-9}$ A.

**Patentansprüche**

1. Verfahren zum Herstellen eines Dünnfilmkondensators mit Metalloxid- oder -nitrid-Dielektrikum hoher Dielektrizitätskonstante, bei welchem auf ein Isolations- oder Halbleitersubstrat (11) ein erster elektrisch leitender Metall-Dünnfilm als Kondensatorbelag (13) aufgebracht wird, auf dem in einer Vakuum-Kammer eine Metalloxid- oder -nitridlage als dielektrischer Dünnfilm (15) gebildet wird, um abschließend hierauf einen zweiten elektrisch leitenden Metall-Dünnfilm als Gegenbelag (17) aufzutragen, dadruch gekennzeichnet,

daß die Oberfläche des Kondensatorbelags (13) unmittelbar der Ionenstrahl-Implantation ausgesetzt wird, so daß der betreffende Metall-Dünnfilmbereich je nach Art der implantierten Ionen entweder in eine Metalloxid- oder -nitridlage auf dem Kondensatorbelag (13) umgewandelt wird,
daß anschließend mittels eines Aufheizverfahrensschritts in einer je nach bei der Ionenstrahl-Implantation angewendeten Ionenart gewählten Atmosphäre aus Sauerstoff oder Stickstoff die bei der Ionenstrahl-Implantation entstandenen Oberflächenschäden des dielektrischen Dünnfilms (15) durch Temperatur-behandlung ausgemerzt werden, bevor abschließend der Gegenbelag (17) aufgebracht wird.

2. Verfahren nach Anspruch 1, dadurch gekennzeichnet, daß der Metallanteil der durch Ionenstrahl-Implantation gebildeten Metalloxid- oder -nitridlage aus Elementen der Nebengruppen IV a und V a besteht.

3. Verfahren nach Anspruch 1 oder 2, dadurch gekennzeichnet, daß Strahlenergie und Zeitdauer bei Ionenstrahl-Implantation derart eingestellt werden, daß sich ein Wert des Verhältnisses von Dielektrizitäts-Konstante zu Dielektrikums-Dicke größer als 0,4 nm$^{-1}$ ergibt.

4. Verfahren nach den Ansprüchen 2 bis 3, dadurch gekennzeichnet, daß die Strahlungsdosis zur Ionenstrahl-Implantation derart gewählte wird, daß $5\times10^{16}$ bis $5\times10^{17}$ Ionen/cm$^2$ in den Oberflächenbereich des Kondensatorbelags (13) implantiert werden.

5. Verfahren nach dne Ansprüchen 2 und 3, dadurch gekennzeichnet, daß die Strahlungs-

dosis zur Ionenstrahl-Implantation so gewählt wird, daß $10^{15}$ Ionen/cm² an der inneren Oberfläche des Kondensatorbelags (13) implantiert werden.

## Revendications

1. Procédé pour fabriquer un condensateur à couche mince comportant un diélectrique d'oxyde de métal ou de nitrure de métal dont la constante diélectrique est élevée, où on dépose sur un substrat d'isolation ou un substrat semiconducteur (11) une première couche mince métallique conductrice électriquement faisant fonction d'électrode du condensateur (13) sur laquelle on fait croître dans une enceinte sous vide une couche d'oxyde de métal ou de nitrure de métal comme couche mince diélectrique (15) de façon à déposer enfin sur cette couche une seconde couche mince métallique conductrice électriquement faisant fonction de contre-électrode du condensateur (17), caractérisé

en ce que la surface de ladite électrode du condensateur (13) est directement exposée à l'implantation du faisceau ionique de telle sorte que la région de la couche mince métallique de l'électrode du condensateur qui subit l'implantation du faisceau ionique est convertie selon le type d'ions implantés soit en une couche d'oxyde de métal soit en une couche de nitrure de métal,
et en ce que immédiatement après, dans une étape d'échauffement, les dommages apparaissant à la surface de la couche mince diélectrique (15), causés par l'implantation du faisceau ionique sont exposés selon un traitement thermique à une atmosphère qui, en fonction du type d'ions utilisés pour l'implantation du faisceau ionique, contient soit de l'oxygène soit de l'azote avant que n'ait lieu au cours d'une dernière étape le dépot de la contre-électrode (17).

2. Procédé selon la revendication 1, caractérisé en ce qu'une partie métallique de la couche en oxyde ou en nitrure de métal issue de l'implantation du faisceau ionique est constituée par des éléments des sous-groupes IV et V.

3. Procédé selon la revendication 1 ou 2, caractérisé en ce que l'énergie et la durée pour l'application dudit faisceau ionique sont choisies lors de l'implantation dudit faisceau de manière à obtenir une valeur du rapport de la constante de la capacité diélectrique et de l'épaisseur du diélectrique supérieure à 0,4 nm⁻¹.

4. Procédé selon les revendications 2 ou 3, caractérisé en ce que le débit d'exposition de l'implantation ionique est choisi de manière à implanter une dose comprise entre $5 \times 10^{16}$ et

$5 \times 10^{17}$ ions/cm² dans la région de surface de l'électrode du condensateur (13).

5. Procédé selon les revendications 2 et 3, caractérisé en ce que le débit d'exposition de l'implantation ionique est choisi de manière à implanter une dose égale à $10^{15}$ ions/cm² à l'intérieur de la surface de l'électrode du condensateur (13).

## Claims

1. Method of making a thin film capacitor with metal oxide or nitride dielectric with a high dielectricity constant, where on an isolation or semiconductor substrate (11) a first electrically conductive metal thin film is applied as capacitor electrode (13) on which in a vacuum chamber a metal oxide or nitride layer is formed as dielectric thin film (15), to apply subsequently a second electrically conductive metal thin film as a counter capacitor electrode (17), characterized in that

the surface of the capacitor electrode (13) is directly exposed to the ion beam implantation so that the respective metal thin film region, depending on the type of ions implanted, is transformed either into a metal oxide or metal nitride layer on the capacitor electrode (13),
that subsequently, by means of a heating process step, in an oxygen or nitrogen atmosphere selected depending on the ion type used for ion beam implantation, the surface defects caused by ion beam implantation of the dielectric thin film (15) are eliminated by means of temperature processing before the counter capacitor electrode (17) is finally deposited.

2. Method as claimed in claim 1, characterized in that the metal percentage of the metal oxide or nitride layer formed by ion beam implantation consists of elements of the subgroups 4A and 5A.

3. Method as claimed in claim 1 or 2, characterized in that beam energy and duration of ion beam implantation are selected in such a manner that a value of the ratio of dielectricity constant to dielectric film thickness of greater than 0.4 nm⁻¹ is achieved.

4. Method as claimed in any one of claims 2 to 3, characterized in that the radiation dosage to ion beam implantation is selected in such a manner that $5 \times 10^{16}$ to $5 \times 10^{17}$ ions/cm² are implanted in the surface region of the capacitor electrode (13).

5. Method as claimed in any one of claims 2 and 3, characterized in that the radiation dosage to ion beam implantation is selected in such a manner that $10^{15}$ ions/cm² are implanted at the inner surface of the capacitor electrode (13).

```
                                    ┌─────────────────────┐
                                    │  METALLNIEDERSCHLAG │
                                    │    AUF SUBSTRAT      │
                                    └─────────────────────┘
                                              │
          ┌──────────────────────────┐        │
AR-O₂ ──→ │ METALLOXID-AUFTRAGUNG     │ ──────→│
          │ MITTELS HF-ZERSTÄUBG.     │        │
          └──────────────────────────┘        ▼
                                    ┌─────────────────────┐
                                    │ O⁺-ODER N⁺-IONEN-   │
                                    │   IMPLANTATION      │
                                    └─────────────────────┘
                                              │
                                              ▼
                                    ┌─────────────────────┐
                                    │     AUFHEIZUNG      │
                                    └─────────────────────┘
                                              │
                                              ▼
                                    ┌─────────────────────┐
                                    │ AUFBRINGEN EINER    │
                                    │ METALLISCHEN        │
                                    │ GEGENELEKTRODE      │
                                    └─────────────────────┘
```

FIG. 1

FIG. 2